(19) Europäisches Patentamt
European Patent Office
Office européen des brevets

(11) **EP 4 712 627 A1**

(12) **EUROPEAN PATENT APPLICATION**
published in accordance with Art. 153(4) EPC

(43) Date of publication:
**18.03.2026 Bulletin 2026/12**

(21) Application number: **24818445.9**

(22) Date of filing: **14.05.2024**

(51) International Patent Classification (IPC):
*H04W 72/0446* (2023.01)   *H04W 72/0453* (2023.01)
*H04W 72/12* (2023.01)   *H04W 72/50* (2023.01)
*H04L 5/00* (2006.01)

(52) Cooperative Patent Classification (CPC):
**H04L 5/00; H04W 72/0446; H04W 72/0453;
H04W 72/12; H04W 72/50**

(86) International application number:
**PCT/CN2024/092977**

(87) International publication number:
**WO 2024/250912 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.06.2023 CN 202310677876**

(71) Applicant: **Huawei Technologies Co., Ltd.
Shenzhen, Guangdong 518129 (CN)**

(72) Inventors:
• **ZHAO, Mingming
Shenzhen, Guangdong 518129 (CN)**
• **ZHOU, Kaiwen
Shenzhen, Guangdong 518129 (CN)**
• **CHEN, Zhitang
Shenzhen, Guangdong 518129 (CN)**
• **ZHAO, Zhongliang
Shenzhen, Guangdong 518129 (CN)**
• **LI, Aofeng
Shenzhen, Guangdong 518129 (CN)**

(74) Representative: **Thun, Clemens
Mitscherlich PartmbB
Karlstraße 7
80333 München (DE)**

(54) **RESOURCE ALLOCATION METHOD AND APPARATUS**

(57)    Disclosed is a resource allocation method. The method includes: obtaining first scheduling information based on predicted data transmission performance and a resource allocation objective of a plurality of terminals; sending a resource allocation indication to a plurality of APs based on the first scheduling information; obtaining actual data transmission performance that is of the plurality of terminals and that is sent by the plurality of APs, where the actual data transmission performance is data transmission performance of the plurality of terminals upon resource allocation performed on the plurality of terminals based on the resource allocation indication; obtaining second scheduling information based on the actual data transmission performance and the resource allocation objective; and sending the resource allocation indication to the plurality of APs based on the second scheduling information. In this application, a hybrid scheduling framework controlled by a control device in a centralized manner and coordinated by the AP in a distributed manner is used. The control device may determine the resource allocation indication based on real-time data transmission performance of the terminal and feedback information of the AP, so that the terminal device can better meet a requirement indicated by the resource allocation objective in a next scheduling period, thereby improving resource utilization.

EP 4 712 627 A1

Obtain first scheduling information based on predicted data transmission performance and a resource allocation objective of a plurality of terminals, where the first scheduling information indicates a time-frequency resource allocated to each terminal, and the plurality of terminals are connected to a plurality of access points APs; and the plurality of terminals that have the predicted data transmission performance meet the resource allocation objective under resource allocation of the first scheduling information

401

Send a resource allocation indication to the plurality of APs based on the first scheduling information

402

Obtain actual data transmission performance that is of the plurality of terminals and that is sent by the plurality of APs, where the actual data transmission performance is data transmission performance of the plurality of terminals upon resource allocation performed on the plurality of terminals based on the resource allocation indication

403

Obtain second scheduling information based on the actual data transmission performance and the resource allocation objective, where the plurality of terminals that have the actual data transmission performance meet the resource allocation objective under resource scheduling of the second scheduling information

404

Send the resource allocation indication to the plurality of APs based on the second scheduling information

405

FIG. 4

## Description

This application claims priority to Chinese Patent Application No. 202310677876.9, filed with the China National Intellectual Property Administration on June 8, 2023 and entitled "RESOURCE ALLOCATION METHOD AND APPARATUS", which is incorporated herein by reference in its entirety.

## TECHNICAL FIELD

This application relates to the field of wireless local area network (wireless local area network, WLAN) technologies, and in particular, to a resource allocation method and apparatus.

## BACKGROUND

Home wireless network services are developing explosively, among which Wi-Fi services dominate and account for an increasingly large proportion. To meet reliable network coverage and a continuously increasing traffic requirement, a consumer usually considers adding Wi-Fi access points (which may be referred to as APs in embodiments of this application). When density of the access points reaches a specific scale, wireless air interface resources become a main bottleneck for improving network performance. In a mainstream home network solution, no coordination exists among a plurality of APs, and uncoordinated air interface resource contention further reduces air interface resource utilization. In an existing multi-AP access scenario, a plurality of APs contend with each other in an uncoordinated manner. A resource waste is caused in an avoidance phase after a conflict occurs, resulting in low wireless resource utilization.

Therefore, a resource allocation method in a Wi-Fi coordination scenario needs to be provided to improve wireless resource utilization.

## SUMMARY

This application provides a resource allocation method and apparatus, to improve wireless resource utilization.

A first aspect of this application provides a resource allocation method. The method includes: obtaining first scheduling information based on predicted data transmission performance and a resource allocation objective of a plurality of terminals, where the first scheduling information indicates a time-frequency resource allocated to each terminal, and the plurality of terminals are connected to a plurality of access points APs; and the plurality of terminals that have the predicted data transmission performance meet the resource allocation objective under resource allocation of the first scheduling information; sending a resource allocation indication to the plurality of APs based on the first scheduling information; obtaining actual data transmission performance that is of the plurality of terminals and that is sent by the plurality of APs, where the actual data transmission performance is data transmission performance of the plurality of terminals upon resource allocation performed on the plurality of terminals based on the resource allocation indication; obtaining second scheduling information based on the actual data transmission performance and the resource allocation objective, where the plurality of terminals that have the actual data transmission performance meet the resource allocation objective under resource scheduling of the second scheduling information; and sending the resource allocation indication to the plurality of APs based on the second scheduling information.

In this application, a hybrid scheduling framework controlled by a control device in a centralized manner and coordinated by the AP in a distributed manner is used. The control device may obtain feedback information (including the actual data transmission performance) of the AP. The actual data transmission performance of the terminal may be different from the predicted data transmission performance. Therefore, time-frequency resource allocation of the terminal may be performed again based on the actual data transmission performance, so that the plurality of terminals that have the actual data transmission performance meet the resource allocation objective under resource scheduling of the second scheduling information. The actual data transmission performance is closer to real data transmission performance of the terminal in a next scheduling period than the predicted data transmission performance. Therefore, the resource allocation indication determined based on the actual data transmission performance can enable the terminal device to better meet a requirement indicated by the resource allocation objective in the next scheduling period, thereby improving resource utilization.

In a possible implementation, the predicted data transmission performance and the actual data transmission performance include a data transmission rate or a round trip time RTT of the terminal.

In a possible implementation, the resource allocation objective includes optimizing a first characteristic of all or a part of the plurality of terminals, and the first characteristic is related to a data throughput (for example, maximizing a data throughput of a terminal that performs a service requiring a high throughput).

In a possible implementation, to prevent a difference between quantities of time-frequency resources allocated to the terminals from being excessively large (in other words, to prevent a quantity of time-frequency resources allocated to the part of terminals from being excessively small), for the terminal that performs the service requiring the high throughput, the resource allocation objective may include optimizing the first characteristic of all or the part of the plurality of terminals. The first characteristic is related to at least one of a degree of difference between quantities of allocated time-frequency resources of different terminals.

In a possible implementation, all or the part of terminals are terminals that perform the service requiring the high throughput in the plurality of terminals.

In a possible implementation, the resource allocation objective includes optimizing a second characteristic of all or the part of the plurality of terminals, and the second characteristic is related to the RTT of the terminal.

In a possible implementation, all or the part of terminals are terminals that perform a service with a high requirement on a delay in the plurality of terminals.

In a possible implementation, the resource allocation objective includes setting an RTT of all or the part of the plurality of terminals to be less than a first preset value, and the first preset value is determined by using a neural network based on the RTT in the actual data transmission performance.

After the control device delivers a slot slice sequence obtained through solving, the AP executes the slot sequence and feeds back an actually measured RTT and a case in which the AP dynamically modifies slot allocation. After obtaining feedback, the control device corrects a theoretical delay input by using a neural network (for example, the neural network may be trained offline in advance), to achieve an adaptive adjustment effect.

In a possible implementation, the time-frequency resource allocated to each terminal in the first scheduling information or the second scheduling information is a resource determined in one scheduling period.

According to a second aspect, this application provides a resource allocation method. The method includes:

> obtaining a resource allocation indication sent by a control device, where the resource allocation indication is determined based on predicted data transmission performance and a resource allocation objective of a plurality of terminals;
> performing resource allocation on at least one connected terminal based on the resource allocation indication, where the at least one terminal belongs to the plurality of terminals;
> obtaining actual data transmission performance of the at least one terminal, where the actual data transmission performance is data transmission performance of the at least one terminal upon resource allocation performed based on the resource allocation indication; and
> sending the actual data transmission performance to the control device.

In a possible implementation, the method further includes:

> obtaining the resource allocation indication sent by the control device after the sending the actual data transmission performance to the control device, where the resource allocation indication is determined based on second scheduling information, and the second scheduling information is determined based on the actual data transmission performance and the resource allocation objective; and performing resource allocation on the at least one connected terminal based on the resource allocation indication, where the at least one terminal belongs to the plurality of terminals.

In a possible implementation, the resource allocation indication is specifically determined based on first scheduling information, the first scheduling information is determined based on the predicted data transmission performance of the plurality of terminals and the resource allocation objective, the first scheduling information indicates a time-frequency resource allocated to each terminal, and the plurality of terminals are connected to a plurality of access points APs; and the plurality of terminals that have the predicted data transmission performance meet the resource allocation objective under resource allocation of the first scheduling information.

In a possible implementation, the predicted data transmission performance and the actual data transmission performance include a data transmission rate or a round trip time RTT of the terminal.

In a possible implementation, the resource allocation objective includes optimizing a first characteristic of all or a part of the plurality of terminals, and the first characteristic is related to at least one of a data throughput and a degree of difference between quantities of allocated time-frequency resources of different terminals.

In a possible implementation, all or the part of terminals are terminals that perform a service requiring a high throughput in the plurality of terminals.

In a possible implementation, the resource allocation objective includes optimizing a second characteristic of all or the part of the plurality of terminals, and the second characteristic is related to the RTT of the terminal.

In a possible implementation, all or the part of terminals are terminals that perform a service with a high requirement on a delay in the plurality of terminals.

In a possible implementation, the resource allocation objective includes setting an RTT of all or the part of the plurality of terminals to be less than a first preset value, and the first preset value is determined by using a neural network based on the RTT in the actual data transmission performance.

In a possible implementation, the time-frequency resource allocated to each terminal in the first scheduling information or the second scheduling information is a resource determined in one scheduling period.

According to a third aspect, this application provides a system, including a control device and a plurality of APs communicating with the control device, where

the control device is configured to: obtain first scheduling information based on predicted data transmission performance and a resource allocation objective of a plurality of terminals, where the first scheduling information indicates a time-frequency resource allocated to each terminal, and the plurality of terminals are connected to the plurality of APs; and the plurality of terminals that have the predicted data transmission performance meet the resource allocation objective under resource allocation of the first scheduling information; and send a resource allocation indication to the plurality of APs based on the first scheduling information;

each of the plurality of APs is configured to: perform resource allocation on at least one connected terminal based on the resource allocation indication, where the at least one terminal belongs to the plurality of terminals; obtain actual data transmission performance of the at least one terminal, where the actual data transmission performance is data transmission performance of the at least one terminal upon resource allocation performed based on the resource allocation indication; and send the actual data transmission performance to the control device; and

the control device is further configured to: obtain second scheduling information based on the actual data transmission performance and the resource allocation objective, where the plurality of terminals that have the actual data transmission performance meet the resource allocation objective under resource scheduling of the second scheduling information; and send the resource allocation indication to the plurality of APs based on the second scheduling information.

For descriptions of the control device, refer to the first aspect. For descriptions of the AP, refer to the second aspect. Similarities are not described herein again.

According to a fourth aspect, this application provides a resource allocation apparatus. The apparatus includes:

a processing module, configured to obtain first scheduling information based on predicted data transmission performance and a resource allocation objective of a plurality of terminals, where the first scheduling information indicates a time-frequency resource allocated to each terminal, and the plurality of terminals are connected to a plurality of access points APs; and the plurality of terminals that have the predicted data transmission performance meet the resource allocation objective under resource allocation of the first scheduling information; and

a sending module, configured to send a resource allocation indication to the plurality of APs based on the first scheduling information, where

the processing module is further configured to: obtain actual data transmission performance that is of the plurality of terminals and that is sent by the plurality of APs, where the actual data transmission performance is data transmission performance of the plurality of terminals upon resource allocation performed on the plurality of terminals based on the resource allocation indication; obtain second scheduling information based on the actual data transmission performance and the resource allocation objective, where the plurality of terminals that have the actual data transmission performance meet the resource allocation objective under resource scheduling of the second scheduling information; and

the sending module is further configured to send the resource allocation indication to the plurality of APs based on the second scheduling information.

In a possible implementation, the predicted data transmission performance and the actual data transmission performance include a data transmission rate or a round trip time RTT of the terminal.

In a possible implementation, the resource allocation objective includes optimizing a first characteristic of all or a part of the plurality of terminals, and the first characteristic is related to at least one of a data throughput and a degree of difference between quantities of allocated time-frequency resources of different terminals.

In a possible implementation, all or the part of terminals are terminals that perform a service requiring a high throughput in the plurality of terminals.

In a possible implementation, the resource allocation objective includes optimizing a second characteristic of all or the part of the plurality of terminals, and the second characteristic is related to the RTT of the terminal.

In a possible implementation, all or the part of terminals are terminals that perform a service with a high requirement on a delay in the plurality of terminals.

In a possible implementation, the resource allocation objective includes setting an RTT of all or the part of the plurality of terminals to be less than a first preset value, and the first preset value is determined by using a neural network based on the RTT in the actual data transmission performance.

In a possible implementation, the time-frequency resource allocated to each terminal in the first scheduling information or the second scheduling information is a resource determined in one scheduling period.

According to a fifth aspect, this application provides a resource allocation apparatus. The apparatus includes:

a processing module, configured to: obtain a resource allocation indication sent by a control device, where the resource allocation indication is determined based on predicted data transmission performance and a resource allocation objective of a plurality of terminals;

perform resource allocation on at least one connected terminal based on the resource allocation indication, where the at least one terminal belongs to the plurality of terminals; and

obtain actual data transmission performance of the at least one terminal, where the actual data transmission performance is data transmission performance of the at least one terminal upon resource allocation performed based on the resource allocation indication; and

a sending module, configured to send the actual data transmission performance to the control device.

In a possible implementation, the processing module is further configured to:

obtain the resource allocation indication sent by the control device after the sending the actual data transmission performance to the control device, where the resource allocation indication is determined based on second scheduling information, and the second scheduling information is determined based on the actual data transmission performance and the resource allocation objective; and

perform resource allocation on the at least one connected terminal based on the resource allocation indication, where the at least one terminal belongs to the plurality of terminals.

In a possible implementation, the resource allocation indication is specifically determined based on first scheduling information, the first scheduling information is determined based on the predicted data transmission performance of the plurality of terminals and the resource allocation objective, the first scheduling information indicates a time-frequency resource allocated to each terminal, and the plurality of terminals are connected to a plurality of access points APs; and the plurality of terminals that have the predicted data transmission performance meet the resource allocation objective under resource allocation of the first scheduling information.

In a possible implementation, the predicted data transmission performance and the actual data transmission performance include a data transmission rate or a round trip time RTT of the terminal.

In a possible implementation, the resource allocation objective includes optimizing a first characteristic of all or a part of the plurality of terminals, and the first characteristic is related to at least one of a data throughput and a degree of difference between quantities of allocated time-frequency resources of different terminals.

In a possible implementation, all or the part of terminals are terminals that perform a service requiring a high throughput in the plurality of terminals.

In a possible implementation, the resource allocation objective includes optimizing a second characteristic of all or the part of the plurality of terminals, and the second characteristic is related to the RTT of the terminal.

In a possible implementation, all or the part of terminals are terminals that perform a service with a high requirement on a delay in the plurality of terminals.

In a possible implementation, the resource allocation objective includes setting an RTT of all or the part of the plurality of terminals to be less than a first preset value, and the first preset value is determined by using a neural network based on the RTT in the actual data transmission performance.

In a possible implementation, the time-frequency resource allocated to each terminal in the first scheduling information or the second scheduling information is a resource determined in one scheduling period.

A fifth aspect of embodiments of this application provides a resource allocation apparatus, including at least one processor. The at least one processor is coupled to a memory, and the memory is configured to store a program or instructions. The at least one processor is configured to execute the program or the instructions, so that the apparatus implements the method described in any one of the first aspect or the possible implementations of the first aspect, or implements the method described in any one of the second aspect or the possible implementations of the second aspect.

A sixth aspect of embodiments of this application provides a computer-readable storage medium storing one or more computer-executable instructions. When the computer-executable instructions are executed by a processor, the processor performs the method described in any one of the first aspect or the possible implementations of the first aspect, or implements the method described in any one of the second aspect or the possible implementations of the second aspect.

A seventh aspect of embodiments of this application provides a computer program product (or referred to as a computer program) storing one or more computers. When the computer program product is executed by a processor, the processor performs the method in any one of the first aspect or the possible implementations of the first aspect, or implements the method described in any one of the second aspect or the possible implementations of the second aspect.

An eighth aspect of embodiments of this application provides a chip system. The chip system includes at least one processor, configured to support a resource allocation apparatus in implementing the function in any one of the first aspect or the possible implementations of the first aspect, or implementing the method described in any one of the second aspect or the possible implementations of the second aspect.

In a possible design, the chip system may further include a memory, configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effects brought by any design manner of the second aspect to the eighth aspect, refer to the technical effects brought by different implementations of the first aspect. Details are not described herein again.

## BRIEF DESCRIPTION OF DRAWINGS

FIG. 1 is a diagram of a communication system to which this application is applied;

FIG. 2 is a diagram of a communication system to which this application is applied;

FIG. 3 is a diagram of a communication system to which this application is applied;

FIG. 4 is a diagram of a resource allocation method according to an embodiment of this application;

FIG. 5 is a diagram of resource allocation according to this application;

FIG. 6 is a diagram of a resource allocation process according to this application;

FIG. 7 is a diagram of calculating a delay requirement d according to this application;

FIG. 8 is a diagram of a processing procedure of a communication system to which this application is applied;

FIG. 9 is a diagram of a resource allocation method according to an embodiment of this application;

FIG. 10 is a diagram of a resource allocation apparatus according to an embodiment of this application; and

FIG. 11 is a diagram of a communication apparatus according to an embodiment of this application.

## DESCRIPTION OF EMBODIMENTS

In this application, unless otherwise specified, for same or similar parts in embodiments, refer to each other. In embodiments of this application and implementations/implementation methods/realization methods in embodiments, unless otherwise specified or a logical conflict occurs, terms and/or descriptions are consistent and may be mutually referenced between different embodiments and between the implementations/implementation methods/realization methods in embodiments. Technical features in the different embodiments and the implementations/implementation methods/realization methods in embodiments may be combined to form a new embodiment, implementation, implementation method, or realization method based on an internal logical relationship thereof. The following implementations of this application are not intended to limit the protection scope of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with the another feature based on a requirement. Correspondingly, the apparatus provided in embodiments of this application may also correspondingly implement these features or functions. Details are not described herein.

In descriptions of this application, a term "a plurality of" means two or more unless otherwise specified. "At least one of the following items (pieces)" or a similar expression thereof refers to any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" represents giving an example, an illustration, or a description. Any embodiment or design solution described as "example" or "for example" in embodiments of this application should not be explained as being more preferred or having more advantages than another embodiment or design solution. Exactly, use of the word like "example" or "for example" is intended to present a related concept in a specific manner for ease of understanding.

For ease of understanding a method provided in embodiments of this application, the following describes a system architecture of the method provided in embodiments of this application. It may be understood that the system architecture described in embodiments of this application is intended to describe the technical solutions in embodiments of this application more clearly, and does not constitute a limitation on the technical solutions provided in embodiments of this application.

The technical solutions provided in this application are applicable to a WLAN scenario, for example, are applicable to IEEE 802.11 system standards, for example, 802.11a/b/g, 802.11n, 802.11ac, 802.11ax, or a next generation of 802.11ax, for example, 802.11be or a further next generation standard.

Although embodiments of this application are mainly described by using an example of a deployed WLAN network, especially a network to which the IEEE 802.11 system standards are applied, a person skilled in the art easily understands that aspects of this application may be extended to other networks that use various standards or protocols, for example, Bluetooth (Bluetooth), a high-performance radio LAN (high-performance radio LAN, HIPERLAN) (which is a wireless standard similar to the IEEE 802.11 standard, and mainly used in Europe), a wide area network (WAN), a personal area network (personal area network, PAN), or another known or later developed network. Therefore, various aspects provided in this application may be applied to any appropriate wireless network regardless of used coverage and wireless access protocols.

Embodiments of this application are further applicable to a wireless local area network system, for example, the internet of things (internet of things, IoT) network or the vehicle-to-everything (vehicle to X, V2X). Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The communication systems to which this application is applicable are merely examples for description, and are not limited thereto. Unified descriptions are provided herein, and are not described below again.

A resource allocation method and apparatus provided in embodiments of this application may be applied to a wireless communication system. The wireless communication system may be a wireless local area network (wireless local area network, WLAN) or a cellular network. The method may be implemented by a communication device in the wireless communication system or a chip or a processor in the communication device.

The following describes an application architecture of this application with reference to accompanying drawings.

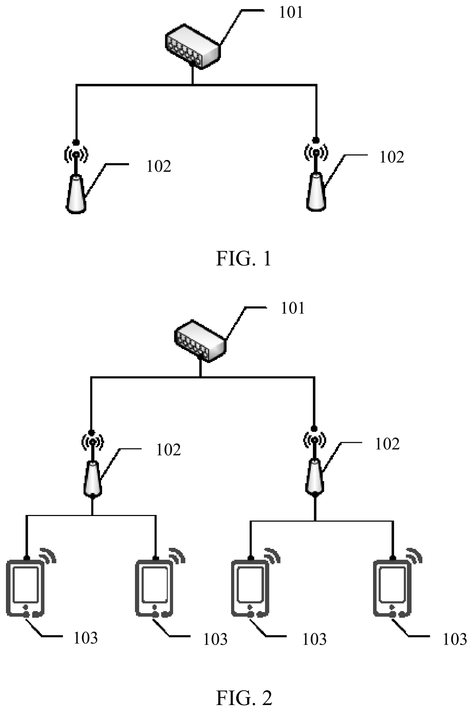

Refer to FIG. 1. To meet a requirement on coverage of a WLAN, a network structure of the WLAN may be set to a wireless controller 101 (or may be referred to as a control device) and a plurality of access point devices (AP device) 102 connected to the wireless controller 101. In this case, the AP is used as an access point of a station STA to implement network communication of the STA.

FIG. 2 is a diagram of a communication system according to an embodiment of this application. As shown in FIG. 2, the communication system mainly includes at least one access point device (AP device) 102 and at least one station (STA) device 103.

The station device 103 may be, for example, a user terminal, a user apparatus, an access apparatus, a subscriber station, a subscriber unit, a mobile station, a user agent, or user equipment that supports a Wi-Fi communication function. The user terminal may include various handheld devices, vehicle-mounted devices, wearable devices, internet of things (internet of things, IoT) devices, or computing devices that have a wireless communication function, or another processing device connected to a wireless modem, user equipments (user equipment, UE) of various forms, a mobile station (mobile station, MS), a terminal (terminal), a terminal device (terminal device), a portable communication device, a handheld device, a portable computing device, an entertainment device, a game device or system, a global positioning system device, or any other appropriate device configured to perform network communication via a wireless medium. In addition, the station device 103 may support the 802.11be standard or a next-generation WLAN standard of 802.11be.

Embodiments of this application may be applied to a Wi-Fi multi-point coordination scenario, for example, may be applied to a scenario in which there are a plurality of rooms in a house (for example, a home scenario or an office scenario). A Wi-Fi access point is deployed in each room to provide a service for a terminal device. The terminal device may include a mobile phone, a personal computer, a tablet device, and various smart home devices. A data transmission service is transmitted over a carrier's network, linked to the network in the house through an optical fiber link, and then delivered by a Wi-Fi node (nearest) that the terminal accesses. Because there are the plurality of Wi-Fi access points, data transmission over a wireless air interface is affected by interference. The interference causes a false alarm of the terminal device and affects normal data receiving.

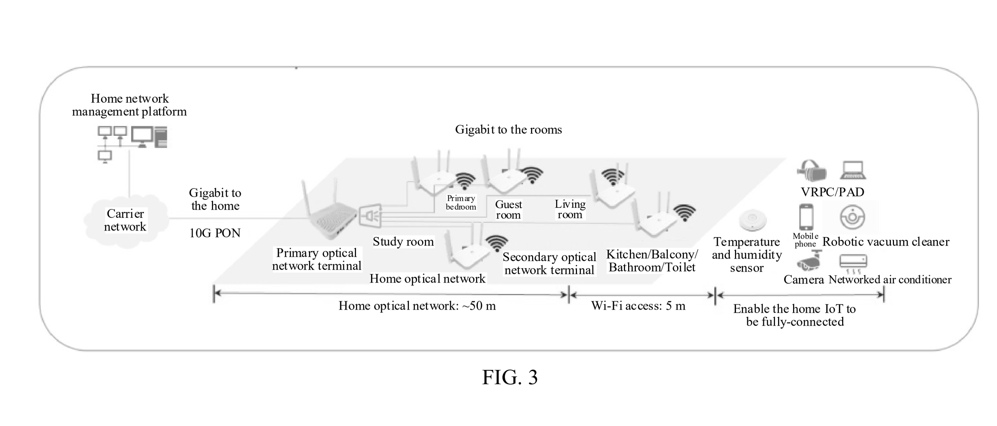

FIG. 3 shows a diagram of a connection relationship between devices. A plurality of Wi-Fi access points are connected to a central processing node (represented by a "primary optical network terminal" in the figure, and may also be referred to as a control device in embodiments of this application), and each AP covers several STAs. When the STA has a data transmission requirement, the central processing node aggregates information collected by all the Wi-Fi access points, and formulates a transmission policy for each Wi-Fi access point to execute. A specific transmission policy may relate to but is not limited to air interface resource allocation, transmit power configuration, and air interface contention parameter setting between the Wi-Fi and a terminal. The Wi-Fi access point is responsible for serving an accessed terminal device, and transmitting, to the terminal device over an air interface and a wireless channel, a data packet requested by the terminal. A terminal user may have a plurality of experience requirements such as a minimum data rate and a maximum tolerable delay. Overall, network performance may be measured by a sum of all user data rates (namely, a network throughput).

Embodiments of this application may be applied to a Wi-Fi multi-point coordination scenario. A plurality of Wi-Fi access points (that is, secondary nodes, for example, fiber to the room, FTTR) are connected to a central processing node (that is, a primary node). The primary node has a strong computing capability, and is responsible for formulating a Wi-Fi scheduling policy and delivering the policy to each secondary node for execution, and aggregating actually measured information fed back by all the secondary nodes. A specific Wi-Fi scheduling policy may relate to but is not limited to air interface resource allocation, transmit power configuration, air interface contention parameter setting, and the like between the Wi-Fi or a terminal. The secondary node is responsible for serving an accessed terminal device, and transmitting, to the terminal device over an air interface and a wireless channel, a data packet requested by the terminal. A terminal user has service requirements such as a maximum tolerable delay and a minimum data rate.

Home wireless network services are developing explosively, among which Wi-Fi services dominate and account for an increasingly large proportion. To meet reliable network coverage and a continuously increasing traffic requirement, a consumer usually considers adding Wi-Fi access points (which may be referred to as APs in embodiments of this application). When density of the access points reaches a specific scale, wireless air interface resources become a main bottleneck for improving network performance. In a mainstream home network solution, no coordination exists among a plurality of APs, and uncoordinated air interface resource contention further reduces air interface resource utilization.

In an existing multi-AP access scenario, a plurality of APs contend with each other in an uncoordinated manner. A resource waste is caused in an avoidance phase after a conflict occurs, resulting in low wireless resource utilization.

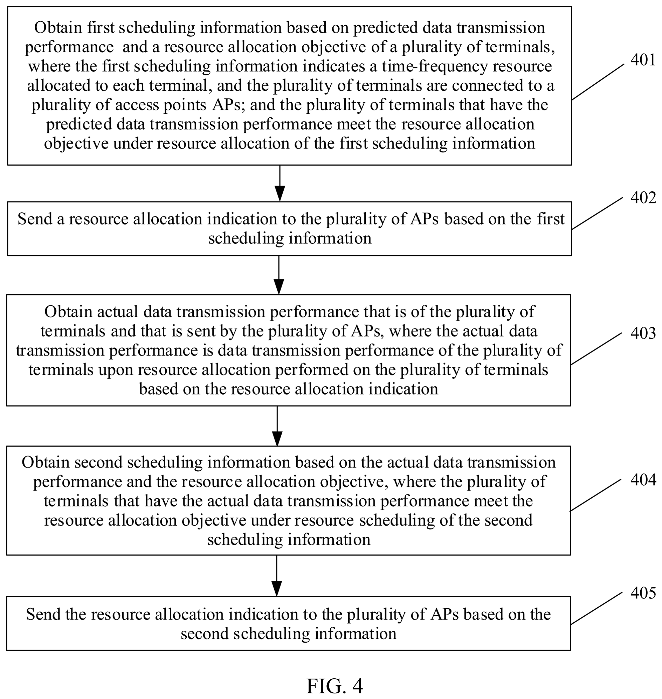

To resolve the foregoing problem, refer to FIG. 4. An embodiment of a resource allocation method in embodiments of this application includes the following steps.

401: Obtain first scheduling information based on predicted data transmission performance and a resource allocation objective of a plurality of terminals, where the first scheduling information indicates a time-frequency resource allocated to each terminal, and the plurality of terminals are connected to a plurality of access points APs; and the plurality of terminals that have the predicted data transmission performance meet the resource allocation objective under resource allocation of the first scheduling information.

In a possible implementation, the plurality of terminals are connected to the plurality of access point APs, and each terminal may be connected to one AP. For example, the plurality of terminals may include a terminal 1 and a terminal 2. The terminal 1 may be connected to an AP 1, and the terminal 2 may be connected to an AP 2. Alternatively, a same AP may be connected to a plurality of terminals. For example, the plurality of terminals may further include a terminal 3, and both the terminal 1 and the terminal 3 may be connected to the AP 1.

The plurality of APs may be connected to a control device, for example, connected to a same primary optical network terminal. The control device may formulate a resource allocation policy corresponding to each terminal device, and transmit the resource allocation policy to each AP for execution by the AP.

In a possible implementation, the plurality of terminal devices are terminals waiting to be scheduled on a target time-frequency resource, and each of the plurality of terminal devices may be a terminal device that has a transmission requirement. For example, the plurality of terminals may be terminals waiting to be scheduled on the target time-frequency resource. Specifically, the plurality of terminal devices may send transmission requirements to the APs, and the plurality of APs may transfer indications of the transmission requirements to the control device. The control device needs to determine resource allocation information for the plurality of terminal devices, and the resource allocation information indicates a time-frequency resource occupied by each of the plurality of terminal devices on the target time-frequency resource when the terminal device receives and sends data.

"Waiting to be scheduled" may be understood as that the terminal needs to transmit data. In actual application, in addition to the terminals waiting to be scheduled, terminals connected to the control device may further include a terminal not waiting to be scheduled.

The time-frequency resource in this embodiment of this application may be a time domain resource, a frequency domain resource, or a resource that includes both a time domain resource and a frequency domain resource. This is not limited in this application.

In a possible implementation, the target time-frequency resource is a resource in a scheduling period. One scheduling period may be, for example, one transmission time interval (transmission time interval, TTI) or a plurality of TTIs.

The time-frequency resource in this application may be represented by a quantity of resource elements (resource element, RE), a quantity of precoding resource block groups (precoding resource block group, PRG), a quantity of physical resource blocks (physical resource block, PRB), a resource block group (resource block group, RBG), or a subband (subband or bandwidth part, BWP). For example, the time-frequency resource may be a scheduling bandwidth in a current scheduling period.

In a possible implementation, the control device needs to allocate the time-frequency resources to the plurality of terminal devices.

To improve wireless resource utilization, when the time-frequency resources are allocated to the plurality of terminal devices, the resource allocation objective and the predicted transmission performance of the terminals may be preset. The time-frequency resources allocated to the terminal devices based on the resource allocation objective and the predicted transmission performance may enable the plurality of terminal devices that have the predicted data transmission performance to meet the resource allocation objective under resource allocation of the first scheduling information.

The following describes the predicted transmission performance of the terminal.

The predicted transmission performance of the terminal may be determined based on a historical data transmission status of the terminal.

In a possible implementation, the predicted data transmission performance includes a data transmission rate of the terminal. The data transmission rate needs to be obtained because a data throughput of the terminal device is an important indicator. The data throughput may be determined based on the transmission rate of the terminal and a quantity of allocated time-frequency resources. For example, for a terminal whose current service is a service requiring a high throughput, an allocated resource needs to ensure that the terminal can have a high data throughput.

For example, a data transmission rate of the terminal device in a next scheduling period may be obtained through estimation based on a data transmission rate of the terminal device in a previous scheduling period (or one scheduling period prior to the previous scheduling period).

In a possible implementation, the predicted data transmission performance includes a round trip time RTT. For example, for a terminal whose service has a high requirement on a delay (or may be referred to as a delay-sensitive service), an allocated resource needs to ensure that the terminal can have a low RTT.

For example, an RTT of the terminal device in the next scheduling period may be obtained through estimation based on an RTT of the terminal device in the previous scheduling period (or the scheduling period prior to the previous scheduling period).

The control device may have a service identification module configured to determine whether the terminal device is running a delay-sensitive service or whether the terminal device is running a service requiring a high throughput.

In addition, the resource allocation objective of the terminal device may be further obtained, and resource allocation is performed based on the resource allocation objective of the terminal device and the predicted transmission performance, so that the plurality of terminals that have the predicted data transmission performance meet the resource allocation objective under resource allocation of the first scheduling information.

Next, the resource allocation objective of the terminal is described.

For a terminal that performs a service requiring a high throughput, a resource allocation objective may include optimizing a first characteristic of the terminal, and the first characteristic is related to a data throughput (for example, maximizing a data throughput of the terminal that performs the service requiring the high throughput).

For a terminal that performs a service requiring a high throughput, a resource allocation objective may include optimizing a first characteristic of the terminal, and the first characteristic is related to a data throughput (for example, maximizing a data throughput of the terminal that performs the service requiring the high throughput).

To prevent a difference between quantities of time-frequency resources allocated to the terminals from being excessively large (in other words, to prevent a quantity of time-frequency resources allocated to a part of terminals from being excessively small), for the terminal that performs the service requiring the high throughput, the resource allocation objective may include optimizing a first characteristic of all or the part of the plurality of terminals. The first characteristic is related to at least one of a degree of difference between quantities of allocated time-frequency resources of different terminals.

For example, the degree of difference may be represented by a variance of the quantities of allocated time-frequency resources.

For a terminal that performs a service with a high requirement on a delay, a resource allocation objective may include optimizing a second characteristic of the terminal, and the second characteristic is related to an RTT (for example, making an RTT of each terminal that performs the service with the high requirement on the delay less than the RTT specified in the resource allocation objective).

Generally, the control device may obtain a delay requirement (for example, 20 ms) of a service currently run by the terminal device, and determine, based on the delay requirement, a value that the RTT needs to meet (a corresponding resource allocation objective is less than the value, and the value may be referred to as a first preset value in embodiments of this application).

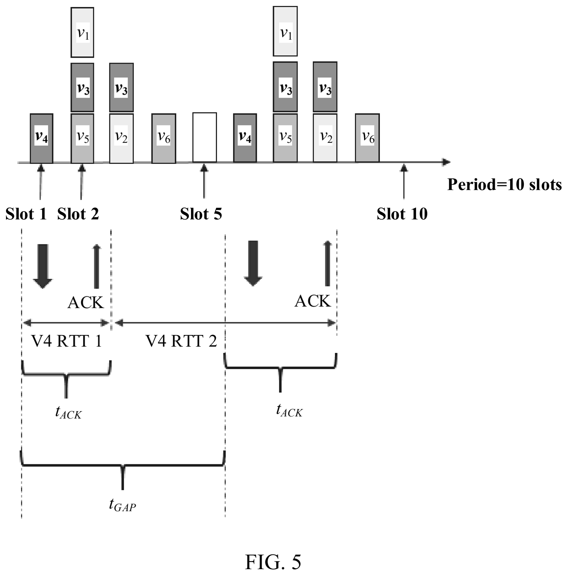

For example, refer to FIG. 5. Slot slice arrangement in FIG. 5 is used as an example. An RTT of a STA v4 is divided into two parts: $t_{GAP}$ and $t_{ACK}$, as shown in FIG. 5. It is assumed that $t_{GAP} \gg t_{ACK}$ and $t_{ACK}$ is stable, and $t_{GAP}$ is mainly optimized. In other words, $t_{GAP}$ may correspond to the RTT in embodiments of this application. This assumption is also made because $t_{ACK}$ cannot be estimated, and a control device side may not learn of return time of an ACK packet of the STA.

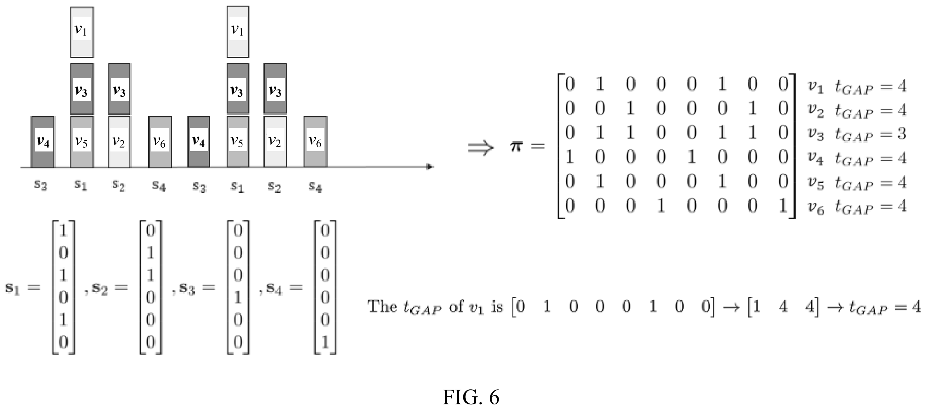

FIG. 6 shows an example of a manner of calculating $t_{GAP}$: A slot slice sequence is represented by using a matrix including 0s and 1s in FIG. 6. Each row of the matrix represents an allocation status of one STA in slot scheduling. Calculation of $t_{GAP}$ is to extract a row from the matrix and calculate an interval between each 1. For example, slot allocation of a STA v1 in the following figure is [0 1 0 0 0 1 0 0], and intervals between 1s are 1 and 4. In addition, because slot slices are cyclically allocated, an interval between the last 1 and the first 1 also needs to be considered. Therefore, all GAP values of the STA v1 are [1, 4, 4], and $t_{GAP}$ may be a maximum value of all the GAPs, that is, 4. $t_{GAP}$ is used as the RTT of the terminal device in this embodiment of this application.

In this embodiment of this application, resource allocation may be performed, so that the terminal device can meet the resource allocation objective when performing data transmission by using the allocated time-frequency resource. Certainly, because resource allocation is based on the estimated transmission performance of the terminal, resource allocation may be inaccurate. As a result, the terminal cannot strictly meet the resource allocation objective in actual data transmission.

The following provides a specific example of a resource allocation process.

In a possible implementation, terminal devices may be classified into a VIP STA (a service with a high requirement on a delay, denoted as $P_{vip}$, for example, a game) and a non-VIP STA (a service requiring a high throughput, denoted as $P_{!vip}$, for example, downloading) based on service types running on the terminal devices. A quantity of STAs is denoted as N, a quantity of different concurrent groups is denoted as M (for example, $s_1$ to $s_4$ in FIG. 6), and a total quantity of slots is denoted as L. In this case, a slot slice sequence $\pi$ is a N $\times$ L-dimensional matrix including 0s and 1s. The following optimization objective is designed for a Wi-Fi scheduling problem:

$$\max_{\pi} \quad \mathcal{L}\big(\{\|\pi_i\|_1\}_{i \in P_{!vip}}\big)$$
$$\text{s.t.} \quad t_{GAP}(v_i) \leq d, \forall i \in P_{vip},$$

where $\mathcal{L}(\{\|\pi_i\|_1\}_{i \in P_{!vip}}) := \Sigma_{i \in P_{!vip}} \overline{Rate}_i \cdot \|\pi_i\|_1 - \lambda Var(\{\|\pi_j\|_1\}_{j \in P_{!vip}})$.

Herein, $\|\pi_i\|_1$ represents a throughput (a quantity of 1s) of a STA vi in the slot slice sequence $\pi$, d represents a hyperparameter of a theoretical delay requirement, $\overline{Rate}_i$ represents rate estimation of the STA vi collected and reported by the AP, Var() represents a variance of set elements, and $\lambda$ represents a hyperparameter for balancing the throughput and fairness. The loss function $\mathcal{L}$ herein is used to maximize a total throughput of the non-VIP STA and ensures fairness. Optionally, the control device may solve the optimization objective based on a depth first search (depth first search, DFS) idea, to be specific, traverse all slot arrangements that meet a constraint, and maximize a throughput function $\mathcal{L}$ of a non-

VIP group user in a feasible arrangement.

In a possible implementation, in addition to the resource allocation objective, signal interference between the APs and the like may be further considered, to determine the first scheduling information. The first scheduling information may include the time-frequency resource allocated to each terminal device.

The combination optimization solution may relate to only an integer operation, and has low complexity, and can meet a computing capability limitation of most Wi-Fi primary nodes (that is, control devices).

402: Send a resource allocation indication to the plurality of APs based on the first scheduling information.

In a possible implementation, after obtaining the first scheduling information, the control device may send the resource allocation indication to the plurality of APs based on the first scheduling information.

The time-frequency resource allocated to each terminal device in the resource allocation indication may be consistent with a time-frequency resource indicated in the first scheduling information, or may be obtained by adjusting a time-frequency resource indicated in the first scheduling information.

For example, to prevent a waste of the time-frequency resource, weights may be dynamically adjusted based on service types of STAs connected to the AP and last times when the STAs are scheduled, and then buffer usage is checked in descending order of the weights, to determine whether the AP has a to-be-sent packet for a STA with a high weight. If the AP has no to-be-sent packet for the STA with the high weight, a STA with a low weight sends a packet, to avoid a slot waste.

In a possible implementation, a resource allocation indication of a terminal device connected to each AP may be delivered to the AP. Further, each AP may control data receiving and sending of the terminal device based on a time-frequency resource indicated by scheduling information.

403: Obtain actual data transmission performance that is of the plurality of terminals and that is sent by the plurality of APs, where the actual data transmission performance is data transmission performance of the plurality of terminals upon resource allocation performed on the plurality of terminals based on the resource allocation indication.

In a possible implementation, because resource allocation is based on the estimated transmission performance of the terminal, resource allocation may be inaccurate. As a result, the terminal cannot strictly meet the resource allocation objective in actual data transmission.

In this embodiment of this application, the actual data transmission performance that is of the plurality of terminals and that is sent by the plurality of APs may be obtained, where the actual data transmission performance is data transmission performance of the plurality of terminals upon resource allocation performed on the plurality of terminals based on the resource allocation indication.

In a possible implementation, the actual data transmission performance may include a data transmission rate or a round trip time RTT of the terminal.

404: Obtain second scheduling information based on the actual data transmission performance and the resource allocation objective, where the plurality of terminals that have the actual data transmission performance meet the resource allocation objective under resource scheduling of the second scheduling information.

In a possible implementation, after the actual data transmission performance is obtained, the second scheduling information may be obtained based on the actual data transmission performance and the resource allocation objective. The actual data transmission performance of the terminal may be different from the predicted data transmission performance. Therefore, time-frequency resource allocation of the terminal may be performed again based on the actual data transmission performance, so that the plurality of terminals that have the actual data transmission performance meet the resource allocation objective under resource scheduling of the second scheduling information. The actual data transmission performance is closer to real data transmission performance of the terminal in the next scheduling period than the predicted data transmission performance. Therefore, the resource allocation indication determined based on the actual data transmission performance can enable the terminal device to better meet a requirement indicated by the resource allocation objective in the next scheduling period, thereby improving resource utilization.

In a possible implementation, the actual transmission performance includes the data transmission rate of the terminal.

In a possible implementation, the actual data transmission performance includes the round trip time RTT.

When the second scheduling information is obtained based on the actual data transmission performance and the resource allocation objective, optionally, the resource allocation objective may include maximizing a data throughput of a part or all of the terminals; optionally, the resource allocation objective may include minimizing a difference between quantities of allocated time-frequency resources of the part or all of the terminals; or optionally, the resource allocation objective may include making an RTT of the part or all of the terminals less than the first preset value.

In a possible implementation, the resource allocation objective includes setting the RTT of all or the part of the plurality of terminals to be less than the first preset value, and the first preset value is determined by using a neural network based on the RTT in the actual data transmission performance. It should be understood that when resource allocation is determined based on the predicted transmission performance, a value (for example, which may be referred to as a second preset value) that an RTT in the resource allocation objective should be less than may alternatively be determined based on the data transmission rate in the predicted transmission performance.

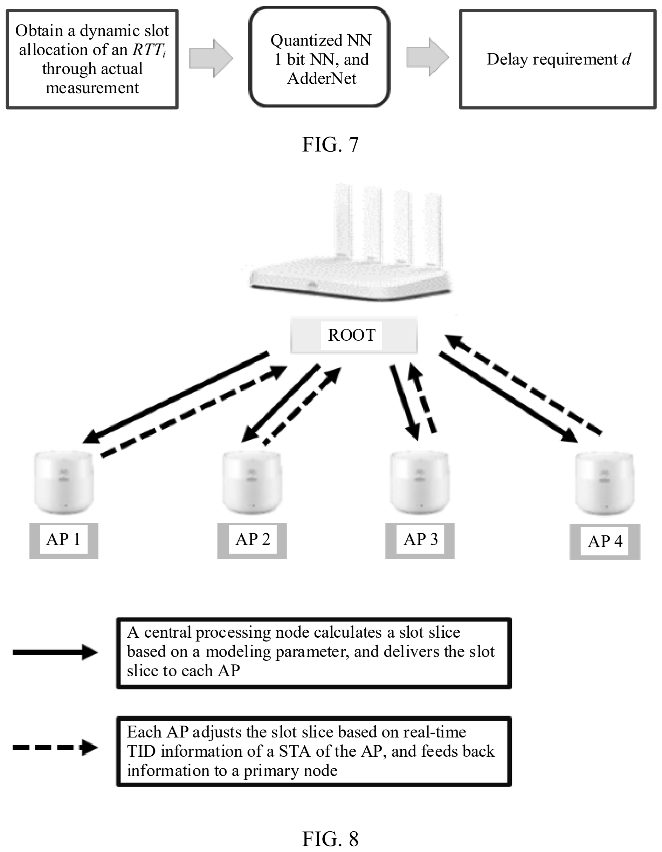

After the control device delivers a slot slice sequence obtained through solving, the AP executes the slot sequence and feeds back an actually measured RTT and a case in which the AP dynamically modifies slot allocation. After obtaining feedback, the control device corrects a theoretical delay input by using a neural network (for example, the neural network may be trained offline in advance), to achieve an adaptive adjustment effect, as shown in FIG. 7.

For details about how to obtain the second scheduling information based on the actual data transmission performance and the resource allocation objective, refer to the descriptions of step 401 in the foregoing embodiment. Similarities are not described herein again.

405: Send the resource allocation indication to the plurality of APs based on the second scheduling information.

For details about how to send the resource allocation indication to the plurality of APs based on the second scheduling information, refer to the descriptions of step 402 in the foregoing embodiment. Similarities are not described herein again.

In an application architecture corresponding to FIG. 4, a scheduling selection is adjusted in real time and in a distributed manner by using centralized scheduling and allocation as a base, and computing resources of Wi-Fi networking are fully used. This can improve or even maximize network performance. FIG. 8 shows a hybrid Wi-Fi scheduling framework with centralized control and distributed coordination according to an embodiment of this application. Centralized control indicates that a control device uses a strong central computing capability of the control device to calculate, through mathematical modeling, a slot slice sequence that meets a theoretical delay requirement, and delivers the slot slice sequence to each secondary node. Distributed coordination indicates that each secondary node dynamically modifies and optimizes current slot slice scheduling based on real-time buffer information (a quantity of data packets in a sending message queue) of a STA being served by the secondary server, and feeds back a modification result, a user rate, an RTT, a buffer, and other statistical information to the control device based on a message period. In this case, based on the feedback information, the control device establishes mapping from an actually measured RTT to a theoretical delay parameter by using a neural network, adaptively corrects the mathematical modeling, and dynamically improves networking performance.

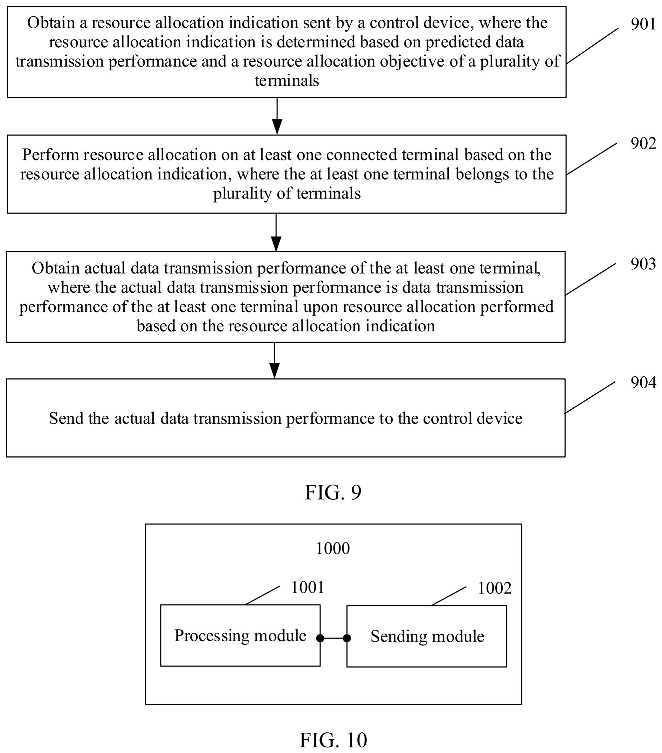

The foregoing describes the resource allocation method in embodiments of this application by using the control device as an execution body. FIG. 9 describes a resource allocation method provided in an embodiment of this application by using an AP as an execution body.

The method includes the following steps.

901: Obtain a resource allocation indication sent by a control device, where the resource allocation indication is determined based on predicted data transmission performance and a resource allocation objective of a plurality of terminals.

In a possible implementation, the resource allocation indication is specifically determined based on first scheduling information, the first scheduling information is determined based on the predicted data transmission performance of the plurality of terminals and the resource allocation objective, the first scheduling information indicates a time-frequency resource allocated to each terminal, and the plurality of terminals are connected to a plurality of access points APs; and the plurality of terminals that have the predicted data transmission performance meet the resource allocation objective under resource allocation of the first scheduling information.

In a possible implementation, the predicted data transmission performance includes a data transmission rate or a round trip time RTT of the terminal.

In a possible implementation, the control device may perform step 401 and step 402 in the foregoing embodiment, so that the AP may obtain the resource allocation indication sent by the control device.

902: Perform resource allocation on at least one connected terminal based on the resource allocation indication, where the at least one terminal belongs to the plurality of terminals.

In a possible implementation, the control device may deliver a resource allocation indication of a terminal device connected to each AP to the AP. Further, each AP may control data receiving and sending of the terminal device based on a time-frequency resource indicated by scheduling information.

903: Obtain actual data transmission performance of the at least one terminal, where the actual data transmission performance is data transmission performance of the at least one terminal upon resource allocation performed based on the resource allocation indication.

In a possible implementation, because resource allocation is based on the estimated transmission performance of the terminal, resource allocation may be inaccurate. As a result, the terminal cannot strictly meet the resource allocation objective in actual data transmission. Therefore, the transmission performance of the terminal device may be updated in real time.

In a possible implementation, the actual data transmission performance may include a data transmission rate or a round trip time RTT of the terminal.

904: Send the actual data transmission performance to the control device.

Further, the control device may obtain second scheduling information based on the actual data transmission performance and the resource allocation objective.

In a possible implementation, after the actual data transmission performance is sent to the control device, the resource allocation indication sent by the control device may be obtained. The resource allocation indication is determined based on the second scheduling information, and the second scheduling information is determined based on the actual data transmission performance and the resource allocation objective. Resource allocation is performed on the at least one connected terminal based on the resource allocation indication, where the at least one terminal belongs to the plurality of terminals.

The foregoing describes this application from a perspective of the method. The following further describes this application from a perspective of an apparatus.

FIG. 10 shows a resource allocation apparatus 1000 according to this application. As shown in FIG. 10, the resource allocation apparatus 1000 includes:

a processing module 1001, configured to obtain first scheduling information based on predicted data transmission performance and a resource allocation objective of a plurality of terminals, where the first scheduling information indicates a time-frequency resource allocated to each terminal, and the plurality of terminals are connected to a plurality of access points APs; and the plurality of terminals that have the predicted data transmission performance meet the resource allocation objective under resource allocation of the first scheduling information, where for specific descriptions of the processing module 1001, refer to the descriptions of step 401 in the foregoing embodiment. Details are not described herein again; and

a sending module 1002, configured to send a resource allocation indication to the plurality of APs based on the first scheduling information, where for specific descriptions of the sending module 1002, refer to the descriptions of step 402 in the foregoing embodiment. Details are not described herein again.

The processing module 1001 is further configured to: obtain actual data transmission performance that is of the plurality of terminals and that is sent by the plurality of APs, where the actual data transmission performance is data transmission performance of the plurality of terminals upon resource allocation performed on the plurality of terminals based on the resource allocation indication; obtain second scheduling information based on the actual data transmission performance and the resource allocation objective, where the plurality of terminals that have the actual data transmission performance meet the resource allocation objective under resource scheduling of the second scheduling information.

For specific descriptions of the processing module 1001, refer to the descriptions of steps 403 and 404 in the foregoing embodiment. Details are not described herein again.

The sending module 1002 is further configured to send the resource allocation indication to the plurality of APs based on the second scheduling information.

For specific descriptions of the sending module 1002, refer to the descriptions of step 405 in the foregoing embodiment. Details are not described herein again.

In a possible implementation, the predicted data transmission performance and the actual data transmission performance include a data transmission rate or a round trip time RTT of the terminal.

In a possible implementation, the resource allocation objective includes optimizing a first characteristic of all or a part of the plurality of terminals, and the first characteristic is related to at least one of a data throughput and a degree of difference between quantities of allocated time-frequency resources of different terminals.

In a possible implementation, all or the part of terminals are terminals that perform a service requiring a high throughput in the plurality of terminals.

In a possible implementation, the resource allocation objective includes optimizing a second characteristic of all or the part of the plurality of terminals, and the second characteristic is related to the RTT of the terminal.

In a possible implementation, all or the part of terminals are terminals that perform a service with a high requirement on a delay in the plurality of terminals.

In a possible implementation, the resource allocation objective includes setting an RTT of all or the part of the plurality of terminals to be less than a first preset value, and the first preset value is determined by using a neural network based on the RTT in the actual data transmission performance.

In a possible implementation, the time-frequency resource allocated to each terminal in the first scheduling information or the second scheduling information is a resource determined in one scheduling period.

An embodiment of this application further provides a resource allocation apparatus. Corresponding to the description of the AP in the foregoing embodiment, the apparatus includes:

a processing module, configured to: obtain a resource allocation indication sent by a control device, where the resource allocation indication is determined based on predicted data transmission performance and a resource allocation objective of a plurality of terminals;

perform resource allocation on at least one connected terminal based on the resource allocation indication, where the at least one terminal belongs to the plurality of terminals; and

obtain actual data transmission performance of the at least one terminal, where the actual data transmission performance is data transmission performance of the at least one terminal upon resource allocation performed based on the resource allocation indication; and

a sending module, configured to send the actual data transmission performance to the control device.

In a possible implementation, the processing module is further configured to:

obtain the resource allocation indication sent by the control device after the sending the actual data transmission performance to the control device, where the resource allocation indication is determined based on second scheduling information, and the second scheduling information is determined based on the actual data transmission performance and the resource allocation objective; and

perform resource allocation on the at least one connected terminal based on the resource allocation indication, where the at least one terminal belongs to the plurality of terminals.

In a possible implementation, the resource allocation indication is specifically determined based on first scheduling information, the first scheduling information is determined based on the predicted data transmission performance of the plurality of terminals and the resource allocation objective, the first scheduling information indicates a time-frequency resource allocated to each terminal, and the plurality of terminals are connected to a plurality of access points APs; and the plurality of terminals that have the predicted data transmission performance meet the resource allocation objective under resource allocation of the first scheduling information.

In a possible implementation, the predicted data transmission performance and the actual data transmission performance include a data transmission rate or a round trip time RTT of the terminal.

In a possible implementation, the resource allocation objective includes optimizing a first characteristic of all or a part of the plurality of terminals, and the first characteristic is related to at least one of a data throughput and a degree of difference between quantities of allocated time-frequency resources of different terminals.

In a possible implementation, all or the part of terminals are terminals that perform a service requiring a high throughput in the plurality of terminals.

In a possible implementation, the resource allocation objective includes optimizing a second characteristic of all or the part of the plurality of terminals, and the second characteristic is related to the RTT of the terminal.

In a possible implementation, all or the part of terminals are terminals that perform a service with a high requirement on a delay in the plurality of terminals.

In a possible implementation, the resource allocation objective includes setting an RTT of all or the part of the plurality of terminals to be less than a first preset value, and the first preset value is determined by using a neural network based on the RTT in the actual data transmission performance.

In a possible implementation, the time-frequency resource allocated to each terminal in the first scheduling information or the second scheduling information is a resource determined in one scheduling period.

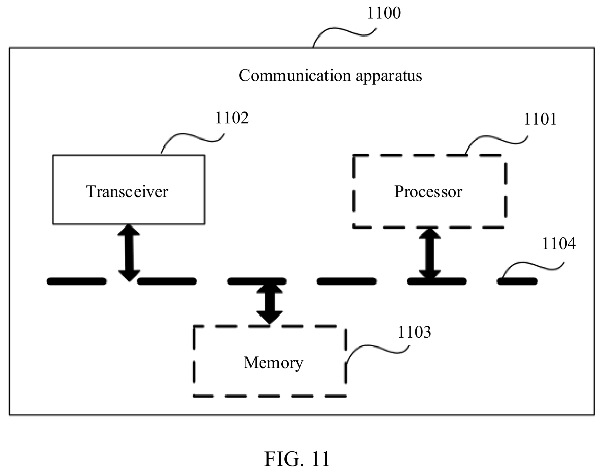

For ease of description, refer to FIG. 11. FIG. 11 is a diagram of a structure of a communication apparatus 1100 according to an embodiment of this application. The communication apparatus 1100 may be a control device, an AP (for example, the AP in the foregoing method embodiments), a STA, or a chip therein. FIG. 11 shows only main components of the communication apparatus 1100. The communication apparatus 1100 includes at least a transceiver 1102.

Optionally, the transceiver 1102 may also be referred to as an input/output port, a communication port, a communication interface, or the like.

Optionally, the communication apparatus 1100 further includes a processor 1101. In addition, the communication apparatus 1100 may further include a memory 1103.

Optionally, a bus 1104 may be further added to the apparatus 1100. The bus 1104 is configured to establish a connection between the transceiver 1102 and/or the memory 1103 and the processor 1101.

The processor 1101 is mainly configured to: process a communication protocol and communication data, control the entire communication apparatus, execute a software program, and process data of the software program. The memory 1103 is mainly configured to store the software program and data. The transceiver 1102 may include a control circuit and an antenna. The control circuit is mainly configured to: perform a conversion between a baseband signal and a radio frequency signal, and process the radio frequency signal. The antenna is mainly configured to receive/send a radio frequency signal in a form of an electromagnetic wave. For example, the transceiver 1102 may be a touchscreen, a display, a keyboard, or the like, and is mainly configured to: receive data entered by a user, and output data to the user.

After the communication apparatus 1100 is powered on, the processor 1101 may read the software program in the memory 1103, interpret and execute instructions of the software program, and process data of the software program. When data needs to be sent wirelessly, the processor 1101 performs baseband processing on the to-be-sent data, and then outputs a baseband signal to a radio frequency circuit. The radio frequency circuit performs radio frequency processing on the baseband signal, and then sends, by using the antenna, a radio frequency signal in a form of an electromagnetic wave. When data is sent to the communication apparatus, the radio frequency circuit receives a radio frequency signal by using the antenna, converts the radio frequency signal into a baseband signal, and outputs the baseband signal to the processor 1101. The processor 1101 converts the baseband signal into data, and processes the data.

Optionally, the memory 1103 may be located inside the processor 1101.

In any one of the foregoing designs, the processor 1101 may include a communication interface for implementing receiving and sending functions. For example, the communication interface may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1101 may store instructions. The instructions may be a computer program. The computer program is run on the processor 1101, so that the communication apparatus 1100 can perform the method described in any one of the embodiments. The computer program may be fixed in the processor 1101. In this case, the processor 1101 may be implemented by hardware.

In an implementation, the communication apparatus 1100 may include a circuit, and the circuit may implement a sending, receiving, or communication function in any one of the embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may alternatively be manufactured by using various IC process technologies, for example, a complementary metal-oxide-semiconductor (complementary metal-oxide-semiconductor, CMOS), an N-type metal-oxide-semiconductor (N-type Metal-oxide-semiconductor, NMOS), a P-type metal-oxide-semiconductor (positive-type metal-oxide-semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and the structure of the communication apparatus may not be limited in FIG. 9. The communication apparatus may be an independent device or may be a part of a large device. For example, the communication apparatus may be:

(1) an independent integrated circuit IC, a chip, or a chip system or subsystem;

(2) a set including one or more ICs, where optionally, the set of ICs may further include a storage component configured to store data and a computer program;

(3) an ASIC, for example, a modem (Modem);

(4) a module that can be embedded in another device;

(5) a receiver, a terminal, an intelligent terminal, a cellular phone, a wireless device, a handheld device, a mobile unit, a vehicle-mounted device, a network device, a cloud device, an artificial intelligence device, or the like; or

(6) others.

In a possible product form, the control device, the AP, and the STA described in embodiments of this application may be implemented by using a general-purpose processor.

It should be understood that the communication apparatuses in the foregoing various product forms have any function of the control device, the AP, or the STA in any one of the foregoing embodiments. Details are not described herein again.

An embodiment of this application further provides a computer-readable storage medium. The computer-readable storage medium stores computer program code. When the foregoing processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus by using a receiving circuit, so that the apparatus performs the method in any one of the foregoing embodiments.

An embodiment of this application further provides a wireless communication system, including a control device and a plurality of APs. The control device may perform the method in any one of the foregoing embodiments.

Methods or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another place. The storage medium may be any available medium accessible to a general-purpose or a special-purpose computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A resource allocation method, wherein the method comprises:

obtaining first scheduling information based on predicted data transmission performance and a resource allocation objective of a plurality of terminals, wherein the first scheduling information indicates a time-frequency resource allocated to each terminal, and the plurality of terminals are connected to a plurality of access points APs; and the plurality of terminals that have the predicted data transmission performance meet the resource allocation objective under resource allocation of the first scheduling information;

sending a resource allocation indication to the plurality of APs based on the first scheduling information;

obtaining actual data transmission performance that is of the plurality of terminals and that is sent by the plurality of APs, wherein the actual data transmission performance is data transmission performance of the plurality of terminals upon resource allocation performed on the plurality of terminals based on the resource allocation indication;

obtaining second scheduling information based on the actual data transmission performance and the resource allocation objective, wherein the plurality of terminals that have the actual data transmission performance meet the resource allocation objective under resource scheduling of the second scheduling information; and

sending the resource allocation indication to the plurality of APs based on the second scheduling information.

2. The method according to claim 1, wherein the predicted data transmission performance and the actual data transmission performance comprise a data transmission rate or a round trip time RTT of the terminal.

3. The method according to claim 1 or 2, wherein the resource allocation objective comprises optimizing a first characteristic of all or a part of the plurality of terminals, and the first characteristic is related to at least one of a data throughput and a degree of difference between quantities of allocated time-frequency resources of different terminals.

4. The method according to claim 3, wherein all or the part of terminals are terminals that perform a service requiring a high throughput in the plurality of terminals.

5. The method according to any one of claims 1 to 4, wherein the resource allocation objective comprises optimizing a second characteristic of all or the part of the plurality of terminals, and the second characteristic is related to the RTT of the terminal.

6. The method according to claim 5, wherein all or the part of terminals are terminals that perform a service with a high requirement on a delay in the plurality of terminals.

7. The method according to claim 5 or 6, wherein the resource allocation objective comprises setting an RTT of all or the part of the plurality of terminals to be less than a first preset value, and the first preset value is determined by using a neural network based on the RTT in the actual data transmission performance.

8. The method according to any one of claims 1 to 7, wherein the time-frequency resource allocated to each terminal in the first scheduling information or the second scheduling information is a resource determined in one scheduling period.

9. A resource allocation method, wherein the method comprises:

obtaining a resource allocation indication sent by a control device, wherein the resource allocation indication is determined based on predicted data transmission performance and a resource allocation objective of a plurality of terminals;

performing resource allocation on at least one connected terminal based on the resource allocation indication, wherein the at least one terminal belongs to the plurality of terminals;

obtaining actual data transmission performance of the at least one terminal, wherein the actual data transmission performance is data transmission performance of the at least one terminal upon resource allocation performed based on the resource allocation indication; and

sending the actual data transmission performance to the control device.

10. A system, comprising a control device and a plurality of APs communicating with the control device, wherein

the control device is configured to: obtain first scheduling information based on predicted data transmission performance and a resource allocation objective of a plurality of terminals, wherein the first scheduling information indicates a time-frequency resource allocated to each terminal, and the plurality of terminals are connected to the plurality of APs; and the plurality of terminals that have the predicted data transmission performance meet the resource allocation objective under resource allocation of the first scheduling information; and send a resource allocation indication to the plurality of APs based on the first scheduling information;

each of the plurality of APs is configured to: perform resource allocation on at least one connected terminal based on the resource allocation indication, wherein the at least one terminal belongs to the plurality of terminals; obtain actual data transmission performance of the at least one terminal, wherein the actual data transmission performance is data transmission performance of the at least one terminal upon resource allocation performed based on the resource allocation indication; and send the actual data transmission performance to the control device; and

the control device is further configured to: obtain second scheduling information based on the actual data transmission performance and the resource allocation objective, wherein the plurality of terminals that have the actual data transmission performance meet the resource allocation objective under resource scheduling of the second scheduling information; and send the resource allocation indication to the plurality of APs based on the second scheduling information.

11. A resource allocation apparatus, wherein the apparatus comprises:

a processing module, configured to obtain first scheduling information based on predicted data transmission performance and a resource allocation objective of a plurality of terminals, wherein the first scheduling information indicates a time-frequency resource allocated to each terminal, and the plurality of terminals are connected to a plurality of access points APs; and the plurality of terminals that have the predicted data transmission performance meet the resource allocation objective under resource allocation of the first scheduling information; and
a sending module, configured to send a resource allocation indication to the plurality of APs based on the first scheduling information, wherein
the processing module is further configured to: obtain actual data transmission performance that is of the plurality of terminals and that is sent by the plurality of APs, wherein the actual data transmission performance is data transmission performance of the plurality of terminals upon resource allocation performed on the plurality of terminals based on the resource allocation indication; obtain second scheduling information based on the actual data transmission performance and the resource allocation objective, wherein the plurality of terminals that have the actual data transmission performance meet the resource allocation objective under resource scheduling of the second scheduling information; and
the sending module is further configured to send the resource allocation indication to the plurality of APs based on the second scheduling information.

12. The apparatus according to claim 11, wherein the predicted data transmission performance and the actual data transmission performance comprise a data transmission rate or a round trip time RTT of the terminal.

13. The apparatus according to claim 11 or 12, wherein the resource allocation objective comprises optimizing a first characteristic of all or a part of the plurality of terminals, and the first characteristic is related to at least one of a data throughput and a degree of difference between quantities of allocated time-frequency resources of different terminals.

14. The apparatus according to claim 13, wherein all or the part of terminals are terminals that perform a service requiring a high throughput in the plurality of terminals.

15. The apparatus according to any one of claims 11 to 14, wherein the resource allocation objective comprises optimizing a second characteristic of all or the part of the plurality of terminals, and the second characteristic is related to the RTT of the terminal.

16. The apparatus according to claim 15, wherein all or the part of terminals are terminals that perform a service with a high requirement on a delay in the plurality of terminals.

17. The apparatus according to claim 15 or 16, wherein the resource allocation objective comprises setting an RTT of all or the part of the plurality of terminals to be less than a first preset value, and the first preset value is determined by using a neural network based on the RTT in the actual data transmission performance.

18. The apparatus according to any one of claims 11 to 17, wherein the time-frequency resource allocated to each terminal in the first scheduling information or the second scheduling information is a resource determined in one scheduling period.

19. A resource allocation apparatus, wherein the apparatus comprises:

a processing module, configured to: obtain a resource allocation indication sent by a control device, wherein the resource allocation indication is determined based on predicted data transmission performance and a resource allocation objective of a plurality of terminals; perform resource allocation on at least one connected terminal based on the resource allocation indication, wherein the at least one terminal belongs to the plurality of terminals; and obtain actual data transmission performance of the at least one terminal, wherein the actual data transmission performance is data transmission performance of the at least one terminal upon resource allocation performed based on the resource allocation indication; and
a sending module, configured to send the actual data transmission performance to the control device.

20. A communication apparatus, comprising at least one processor coupled to a memory, wherein

the memory is configured to store a program or instructions; and
the at least one processor is configured to execute the program or the instructions, for the apparatus to implement the method according to any one of claims 1 to 9.

21. A computer program product comprising program instructions, wherein when the program instructions are run on a computer, the computer is enabled to perform the method according to any one of claims 1 to 9.

22. A computer-readable storage medium, wherein the computer-readable storage medium stores program instructions, and when the program instructions are run, the method according to any one of claims 1 to 9 is performed.

101

102

102

FIG. 1

101

102

102

103

103

103

103

FIG. 2

Home network
management platform

Gigabit to the rooms

Carrier
network

Gigabit to
the home

10G PON

Primary
bedroom

Guest
room

Living
room

VRPC/PAD

Mobile
phone

Robotic vacuum cleaner

Study room

Primary optical
network terminal

Home optical network

Secondary optical
network terminal

Kitchen/Balcony/
Bathroom/Toilet

Temperature
and humidity
sensor

Camera  Networked air conditioner

Home optical network: ~50 m

Wi-Fi access: 5 m

Enable the home IoT to
be fully-connected

FIG. 3

Obtain first scheduling information based on predicted data transmission performance and a resource allocation objective of a plurality of terminals, where the first scheduling information indicates a time-frequency resource allocated to each terminal, and the plurality of terminals are connected to a plurality of access points APs; and the plurality of terminals that have the predicted data transmission performance meet the resource allocation objective under resource allocation of the first scheduling information — 401

Send a resource allocation indication to the plurality of APs based on the first scheduling information — 402

Obtain actual data transmission performance that is of the plurality of terminals and that is sent by the plurality of APs, where the actual data transmission performance is data transmission performance of the plurality of terminals upon resource allocation performed on the plurality of terminals based on the resource allocation indication — 403

Obtain second scheduling information based on the actual data transmission performance and the resource allocation objective, where the plurality of terminals that have the actual data transmission performance meet the resource allocation objective under resource scheduling of the second scheduling information — 404

Send the resource allocation indication to the plurality of APs based on the second scheduling information — 405

FIG. 4

FIG. 5

$$\Rightarrow \quad \boldsymbol{\pi} = \begin{bmatrix} 0 & 1 & 0 & 0 & 0 & 1 & 0 & 0 \\ 0 & 0 & 1 & 0 & 0 & 0 & 1 & 0 \\ 0 & 1 & 1 & 0 & 0 & 1 & 1 & 0 \\ 1 & 0 & 0 & 0 & 1 & 0 & 0 & 0 \\ 0 & 1 & 0 & 0 & 0 & 1 & 0 & 0 \\ 0 & 0 & 0 & 1 & 0 & 0 & 0 & 1 \end{bmatrix} \begin{matrix} v_1 & t_{GAP} = 4 \\ v_2 & t_{GAP} = 4 \\ v_3 & t_{GAP} = 3 \\ v_4 & t_{GAP} = 4 \\ v_5 & t_{GAP} = 4 \\ v_6 & t_{GAP} = 4 \end{matrix}$$

$$\mathbf{s}_1 = \begin{bmatrix} 1 \\ 0 \\ 1 \\ 0 \\ 1 \\ 0 \end{bmatrix}, \mathbf{s}_2 = \begin{bmatrix} 0 \\ 1 \\ 1 \\ 0 \\ 0 \\ 0 \end{bmatrix}, \mathbf{s}_3 = \begin{bmatrix} 0 \\ 0 \\ 0 \\ 1 \\ 0 \\ 0 \end{bmatrix}, \mathbf{s}_4 = \begin{bmatrix} 0 \\ 0 \\ 0 \\ 0 \\ 0 \\ 1 \end{bmatrix}$$

The $t_{GAP}$ of $v_1$ is $\begin{bmatrix} 0 & 1 & 0 & 0 & 0 & 1 & 0 & 0 \end{bmatrix} \rightarrow \begin{bmatrix} 1 & 4 & 4 \end{bmatrix} \rightarrow t_{GAP} = 4$

FIG. 6

| Obtain a dynamic slot allocation of an $RTT_i$ through actual measurement | → | Quantized NN 1 bit NN, and AdderNet | → | Delay requirement $d$ |
|---|---|---|---|---|

FIG. 7

ROOT

AP 1    AP 2    AP 3    AP 4

→ A central processing node calculates a slot slice based on a modeling parameter, and delivers the slot slice to each AP

⇢ Each AP adjusts the slot slice based on real-time TID information of a STA of the AP, and feeds back information to a primary node

FIG. 8

Obtain a resource allocation indication sent by a control device, where the resource allocation indication is determined based on predicted data transmission performance and a resource allocation objective of a plurality of terminals — 901

Perform resource allocation on at least one connected terminal based on the resource allocation indication, where the at least one terminal belongs to the plurality of terminals — 902

Obtain actual data transmission performance of the at least one terminal, where the actual data transmission performance is data transmission performance of the at least one terminal upon resource allocation performed based on the resource allocation indication — 903

Send the actual data transmission performance to the control device — 904

FIG. 9

1000

1001

1002

Processing module • — • Sending module

FIG. 10

1100

Communication apparatus

1102

Transceiver

1101

Processor

1104

1103

Memory

FIG. 11

## INTERNATIONAL SEARCH REPORT

| International application No. |
| --- |
| **PCT/CN2024/092977** |

| | |
| --- | --- |
| **A. CLASSIFICATION OF SUBJECT MATTER** | |
| H04W 72/0446(2023.01)i;  H04W 72/0453(2023.01)i;  H04W 72/12(2023.01)i;  H04W 72/50(2023.01)i;  H04L 5/00(2006.01)i | |
| According to International Patent Classification (IPC) or to both national classification and IPC | |

| **B. FIELDS SEARCHED** |
| --- |
| Minimum documentation searched (classification system followed by classification symbols)<br>    IPC:  H04W,  H04L |
| Documentation searched other than minimum documentation to the extent that such documents are included in the fields searched |
| Electronic data base consulted during the international search (name of data base and, where practicable, search terms used)<br>    CNABS; CNTXT; CNKI; VEN; WOTXT; USTXT; EPTXT; 3GPP: 无线局域网, 接入点, 多个, 终端, 资源, 分配, 调度, 传输性能, 传输速率, 往返时延, 吞吐量, 预计, 估计, 实际, WLAN, AP, resource, allocation, scheduling, transmission, performance, rate, RTT, throughput, estimation, predicting, prediction, actual |

| **C. DOCUMENTS CONSIDERED TO BE RELEVANT** | | |
| --- | --- | --- |
| Category* | Citation of document, with indication, where appropriate, of the relevant passages | Relevant to claim No. |
| X | WO 2015064963 A1 (SAMSUNG ELECTRONICS CO., LTD.) 07 May 2015 (2015-05-07)<br>    description, paragraphs [0002]-[0084] | 1-22 |
| A | CN 110784929 A (TENCENT TECHNOLOGY (SHENZHEN) CO., LTD.) 11 February 2020 (2020-02-11)<br>    entire document | 1-22 |
| A | CN 110996390 A (INSTITUTE OF COMPUTING TECHNOLOGY, CHINESE ACADEMY OF SCIENCES) 10 April 2020 (2020-04-10)<br>    entire document | 1-22 |
| A | KR 101709113 B1 (KOREA UNIVERSITY RESEARCH AND BUSINESS FOUNDATION) 23 February 2017 (2017-02-23)<br>    entire document | 1-22 |

☐ Further documents are listed in the continuation of Box C.     ☑ See patent family annex.

| | | |
| --- | --- | --- |
| \*    Special categories of cited documents: | "T" | later document published after the international filing date or priority date and not in conflict with the application but cited to understand the principle or theory underlying the invention |
| "A"  document defining the general state of the art which is not considered to be of particular relevance | | |
| "D"  document cited by the applicant in the international application | "X" | document of particular relevance; the claimed invention cannot be considered novel or cannot be considered to involve an inventive step when the document is taken alone |
| "E"  earlier application or patent but published on or after the international filing date | | |
| "L"  document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&" | document member of the same patent family |
| "P"  document published prior to the international filing date but later than the priority date claimed | | |

| Date of the actual completion of the international search | Date of mailing of the international search report |
| --- | --- |
| **26 June 2024** | **10 August 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/092977**

| Patent document cited in search report | | | Publication date (day/month/year) | Patent family member(s) | | | Publication date (day/month/year) |
|---|---|---|---|---|---|---|---|
| WO | 2015064963 | A1 | 07 May 2015 | KR | 20150049232 | A | 08 May 2015 |
| | | | | KR | 102152308 | B1 | 26 October 2020 |
| CN | 110784929 | A | 11 February 2020 | None | | | |
| CN | 110996390 | A | 10 April 2020 | None | | | |
| KR | 101709113 | B1 | 23 February 2017 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310677876